# EUROPÄISCHE PATENTSCHRIFT

(11) **EP 2 034 579 B1**
(45) Veröffentlichungstag und Bekanntmachung des Hinweises auf die Patenterteilung: **31.07.2013**
(21) Anmeldenummer: 07115477.7
(22) Anmeldetag: 31.08.2007
(51) Int. Cl.: H02G 3/22, H02G 3/06

(54) **Klemmvorrichtung**
Clamping device
Dispositif de blocage

(43) Veröffentlichungstag der Anmeldung: 11.03.2009
(73) Patentinhaber: AGRO AG, CH-5502 Hunzenschwil (CH)
(72) Erfinder: Rettig, Hans Jörg, 5502 Hunzenschwil (CH)
(74) Vertreter: Rentsch Partner AG

(56) Entgegenhaltungen:
- DE-A1- 3 512 578
- DE-A1- 3 604 213
- DE-A1- 19 840 432
- DE-C1- 3 519 031

## Beschreibung

Die Erfindung betrifft eine Klemmvorrichtung zum Klemmen eines Kabels. Diese Art von Klemmvorrichtungen ist aus dem Stand der Technik bekannt und wird typischer Weise bei Kabeldurchführungen oder Kabeleinführungen an Gehäusen von Geräten oder Schaltschränken eingesetzt. Neben der Zugentlastung des Kabels dient die Klemmvorrichtung häufig auch zum elektrischen Kontaktieren eines Kabelschirms, der unterhalb der äusseren Isolation des Kabels angeordnet ist.

Aus dem Stand der Technik sind Kabeleinführungen bekannt, die aus einem Basisteil, einer damit durch Verschrauben wirkverbindbaren Überwurfmutter und einem zwischen diesen beiden Teilen angeordneten hülsenförmigen Spannfutter bestehen. Das Spannfutter weist auf einem Kreis angeordnete Spannelemente auf, die über eine konische Wirkfläche mit dem Basisteil oder der Überwurfmutter zusammenwirken und durch diese beim Verschrauben gleichmässig radial nach innen gedrückt werden und dadurch eine Klemmwirkung auf ein durchgeführtes Kabel ausüben können. Diese bekannten Klemmvorrichtungen weisen nur einen begrenzten Spannbereich auf und eignen sich daher nur begrenzt für unterschiedliche Kabeldurchmesser.

EP 0 778 644 der Anmelderin zeigt eine Kabelverschraubung aus Metall, bei welcher als Spannfutter eine konusförmige Ringhülse verwendet wird, welche abwechslungsweise von beiden Längsseiten Einbuchtungen aufweist, derart, dass die Ringhülse in der Abwicklung eine zickzackartige mäandrierende Form aufweist.

Das deutsche Gebrauchsmuster DE 84 15 525 zeigt eine Kabelverschraubung aus Kunststoff mit einem Verbund von vergleichsweise kurzen Klemmzungen, die infolge ihrer Konstruktion ebenfalls nur einen begrenzten Spannbereich aufweisen. Die Klemmvorrichtung weist verschiedenste Klemmzungen mit stark unterschiedlichen Querschnittgeometrien auf, die zum Teil rechteckig, parallelogrammartig oder trapezähnlich ausgebildet sind und beim Verspannen keine koordinierte Bewegung aufweisen. Zwischen dem Kabelmantel und der Klemmvorrichtung ist typischer Weise eine Dichtung angeordnet. Beim Verschrauben der Überwurfmutter werden einzelne Klemmzungen in begrenztem Mass selektiv nach innen aus dem verbleibenden Verbund der Klemmzungen gedrückt. Infolge vergleichsweise geringen Länge und der Formgebung eignet sich auch diese Klemmvorrichtung nicht für das Festklemmen von unterschiedlichen Kabeldurchmessern. Infolge der Ausgestaltung werden die Klemmzungen stark unterschiedlich - zum Teil auch seitlich - deformiert und neigen daher zum Brechen.

Ein Problem der bekannten Klemmvorrichtungen für Kabel besteht darin, dass die Spannbacken konstruktionsbedingt nur einen beschränkten radialen Hub aufweisen und üblicher Weise alle in dem selben Masse nach innen gedrückt werden. Dies hat zur Folge, dass für unterschiedliche Kabeldurchmesser unterschiedliche Spannfutter, respektive Kabeleinführungen notwendig sind.

Die DE 35 19 031 beschreibt eine Kabel-Klemmvorrichtung, bestehend aus zwei miteinander verschraubbaren Hülsen und einem darin angeordneten Klemmeinsatz aus Kunststoff. Der Klemmeinsatz weist zwei Arten von entlang dem Umfang abwechselnd angeordneten Klemmfingern auf, deren Querschnitt trapezförmig ist, mit abwechselnder Ausrichtung nach innen und nach aussen. Dadurch werden bei radialer Verformung zwei in radialer Richtung sich verschiebbare Ringe gebildet. Es ergibt sich zwischen dem äusseren als Druckring wirkenden Ring und dem inneren als Klemmring wirkenden Ring ein sich zunehmend vergrössernder Abstand. Dadurch wird eine Vergrösserung des überdeckbaren radialen Klemmbereiches bei möglichst gleich bleibender runder Querschnittskontur erzielt.

Die DE 198 40 432 offenbart ebenfalls eine Kabel-Klemmvorrichtung mit einer Befestigungsbuchse aus Kunststoff, die zwei Arten von Klemmfingern in der Form eines Pentagramms aufweist. Die Klemmfinger sind in Längsrillen geführt, die in der Innenfläche einer der Hülsen angebracht sind. Beim Verschrauben der beiden Hülsen werden die Klemmfinger nach innen verbogen und klemmen das Kabel fest.

Die Aufgabe der Erfindung besteht darin, eine Klemmvorrichtung für ein Kabel zu zeigen, die eine hohe mechanische Festigkeit bietet.

Die Erfindung ist in dem Anspruch 1 definiert. Vorteilhafte Weiterbildungen sind Gegenstand der abhängigen Ansprüche.

Eine bekante Ausführungsform einer Klemmvorrichtung weist ein Basisteil und eine Überwurfmutter auf, die mit dem Basisteil durch Verschrauben wirkverbindbar ist. Anstelle einer Verschraubung sind je nach Anwendungsgebiet auch andere Formen von Wirkverbindungen möglich. Zwischen dem Basisteil und der Überwurfmutter ist ein Spannfutter mit radial nach innen verschieb- oder biegbaren Spannbacken angeordnet. Das Spannfutter kann unter Umständen auch als Teil des Basisteils oder der Überwurfmutter ausgebildet sein. Diese aus dem Stand der Technik bekannten Spannfuttern weissen zwei unterschiedliche Arten von als fingerartige Segmente ausgebildete Spannbacken auf, die auf einem Basisring segmentartig benachbart zueinander angeordnet sind und beim Verschrauben über seitliche Wirkflächen miteinander zusammenwirken. Die Spannbacken stehen von der ringförmigen Basis ab, die je nach Ausführungsform steif oder elastisch ausgebildet ist und damit die Verformung der Spannbacken unterstützt. Insbesondere bei erfindungsgemäßen Ausführungen aus Metall können so die Spannbacken steifer ausgebildet werden. Die Wirkflächen werden durch die Segmente trennende, normaler Weise parallel zur axialen Richtung der Klemmvorrichtung verlaufende Schlitze gebildet und sind so angeordnet, dass zweite Spannbacken über die Wirkflächen durch erste Spannbacken verstärkt radial nach innen gedrückt werden, wenn die ersten Spannbacken mit einem der umschliessenden Teile beim Verschrauben über eine Wirkfläche interagieren. Betrachtet man einen Querschnitt des Spannfutters, sind die Schlitze sekantenartig und bezüglich einer einzelnen Spannbacke symmetrisch zueinander angeordnet.

Die ersten Spannbacken weisen einen im weitesten Sinne trapezartigen Querschnitt auf, der sich zur Mitte der Spannbacke hin verjüngt. Die im undeformierten Zustand zwischen den ersten Spannbacken angeordneten zweiten Spannbacken weisen im weitesten Sinn ebenfalls einen trapezartigen Querschnitt auf, der sich im Unterschied zu den ersten Spannbacken nach aussen hin verjüngt, d.h. zur Mitte hin verbreitert. Infolge dieser Gestaltung wird bewirkt, dass die zweiten Spannbacken über die miteinander seitlich zusammenwirkenden Trapezschenkel durch die ersten Spannbacken in einem gewissen geometriebedingten Übersetzungsverhältnis verstärkt radial nach innen gedrückt werden. Um die Klemmwirkung zu verstärken können die zweiten Spannbacken an der Trapezbasis ausgebildete nach innen vorstehende Elemente aufweisen. Die in der Ausführungsform fingerartig ausgebildeten Spannbacken sind in radialer Richtung biegeelastisch ausgebildet, resp. angeordnet (elastischer Basisring). Gute Resultate werden mit in Längsrichtung pilzförmig ausgebildeten Spannbacken mit einem schlanken Stamm und einem verdickten Oberteil erzielt.

In einer Ausführungsform sind fünf erste und abwechslungsweise dazu fünf zweite Spannbacken angeordnet, die in verschiedener Hinsicht eine optimale Kombination ergeben. Einerseits behindern sich die einzelnen Spannbacken nicht beim nach innen Biegen, so dass ein grosser Spannbereich resultiert. Andererseits weisen die Spannbacken in tangentialer Richtung eine Segmentlänge auf, die trotz ihrer Krümmung keine zu hohe Biegesteifigkeit ergibt. Ein weiterer Vorteil besteht darin, dass je zwei Schlitze auf einer Linie (derselben Sekante) zueinander angeordnet werden können, was die Herstellung stark vereinfacht, da weniger Einschnitte notwendig sind.

Je nach Anwendungsgebiet werden die Bestandteile der Klemmvorrichtung (bis auf die Dichtungen) aus Metall oder Kunststoff gefertigt. Neben der höheren mechanischen Festigkeit bietet Metall zudem den Vorteil, dass sehr hohe Ströme durch ein kontaktiertes Kabel geleitet werden können. Gute Resultate werden erzielt indem das Spannfutter, die Basis und die Überwurfmutter aus Messing hergestellt und dann vernickelt oder anderweitig beschichtet werden. Zur Verbesserung der Gleiteigenschaften zwischen aneinander reibenden Flächen kann das Spannfutter oder andere Teile mit einem Gleitmittel, z.B. einem Gleitwachs beschichtet werden. Gute Resultate werden mit einer Schichtdicke von 0.05 bis 0.2 µm. Das Gleitmittel kann z.B. im Tauchverfahren aufgetragen werden.

Anhand der nachfolgenden Figuren werden Ausführungsbeispiele der Erfindung beschrieben. Es zeigen:
- Fig. 1: eine Klemmvorrichtung (verschraubt) in einer perspektivischen Darstellung;

- Fig. 2: eine Seitenansicht der Klemmvorrichtung gemäss Fig. 1;
- Fig. 3: einen Längsschnitt durch die Klemmvorrichtung entlang der Linie A-A aus Fig. 2;
- Fig. 4: die Klemmvorrichtung gemäss Fig. 1 in einer perspektivischen Explosionsdarstellung;
- Fig. 5: ein Spannfutter in einer Seitenansicht (undeformiert);
- Fig. 6: das Spannfutter in einer axialen Draufsicht;
- Fig. 7: das Spannfutter in einer perspektivischen Darstellung;
- Fig.8: einen Längsschnitt durch das Spannfutter entlang der Linie A-A aus Fig. 6;
- Fig. 9: ein Spannfutter in verspanntem Zustand in einer Perspektive;
- Fig. 10: das Spannfutter gemäss Fig. 9 in einer Draufsicht.

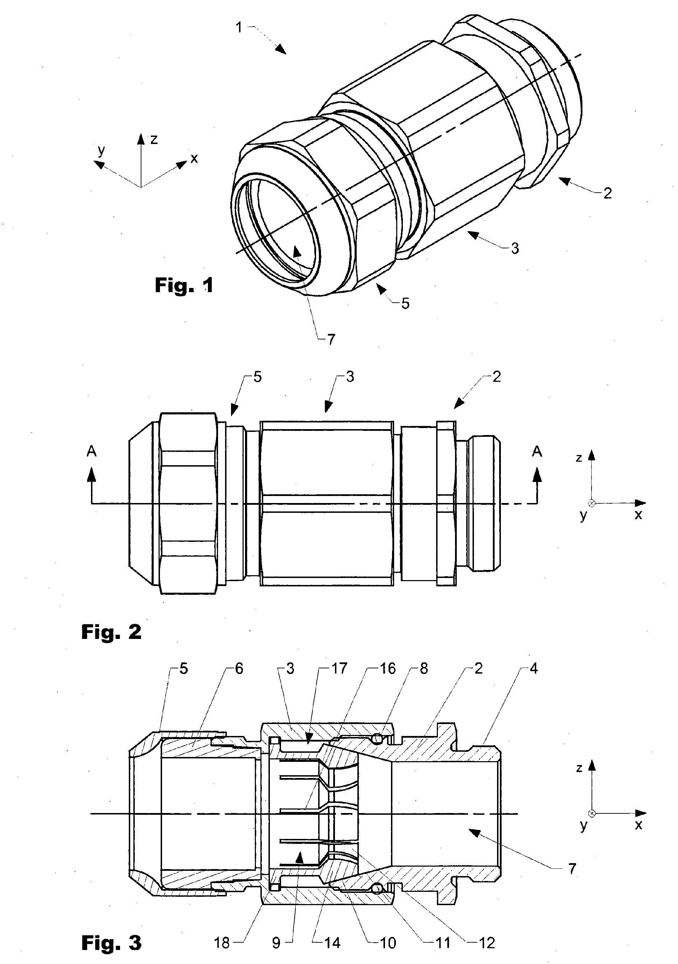

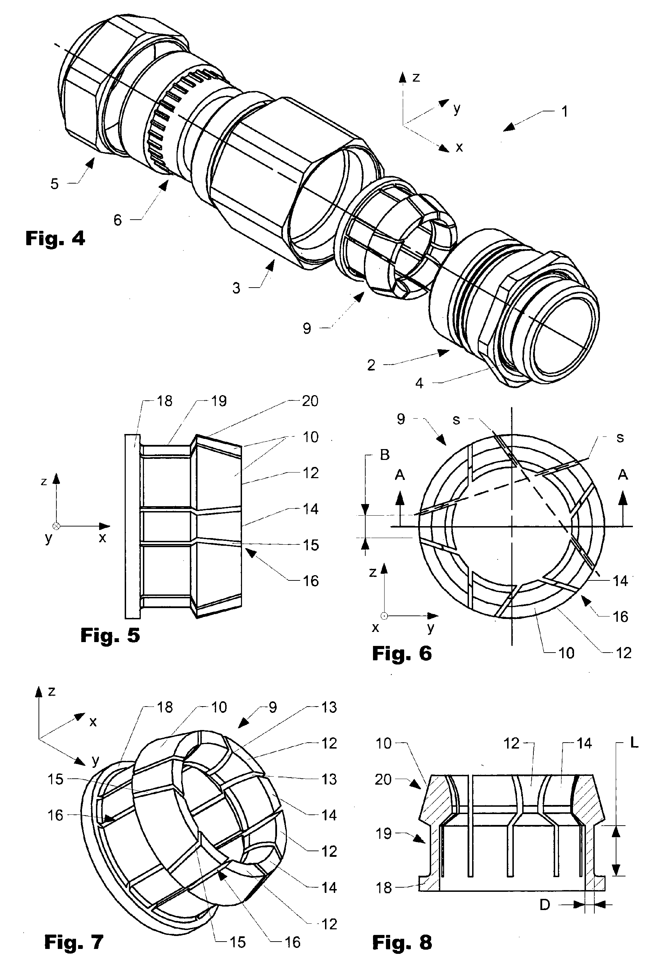

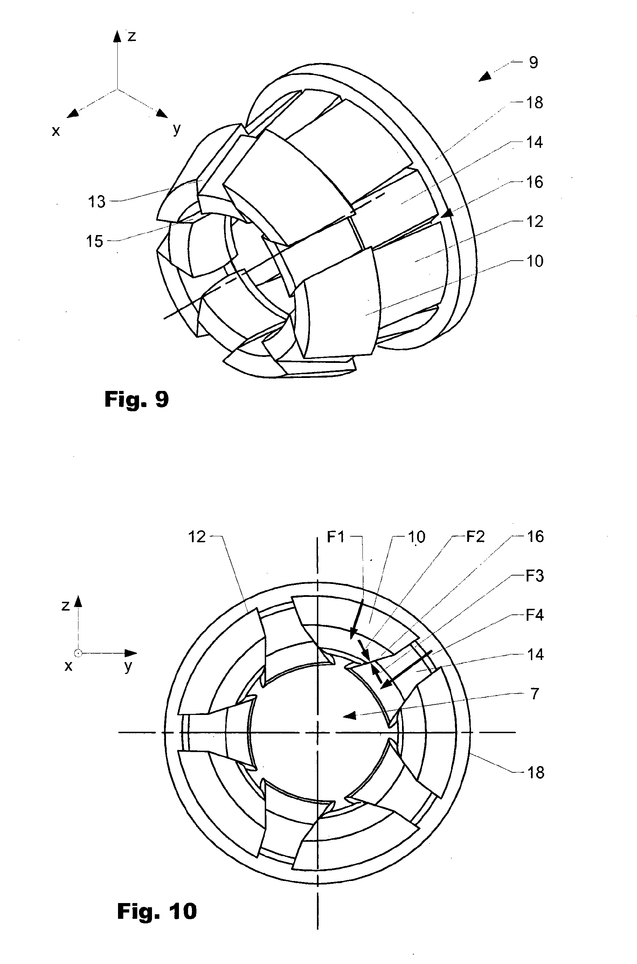

**Figuren 1** bis **4** zeigen beispielhaft eine Ausführungsform einer erfindungsgemässe Klemmvorrichtung 1. **Figur 1** zeigt die Klemmvorrichtung 1 in einer perspektivischen Darstellung und **Figur 2** in einer Seitenansicht. **Figur 4** zeigt die Klemmvorrichtung 1 in einer Explosionszeichnung von schräg oben. **Figur 5** zeigt ein Spannfutter 9 in einer Seitenansicht, **Figur 6** das Spannfutter in einer Frontalansicht, **Figur 7** in einer perspektivischen Ansicht und **Figur 8** zeigt einen Schnitt durch das Spannfutter 9 entlang der Linie AA aus Figur 6. Die **Figuren 9** und **10** zeigen ein Spannfutter in einem deformierten Zustand.

Der Klemmbereich der Klemmvorrichtung 1 besteht im Wesentlichen aus drei Teilen: einem Basisteil 2, einer hülsenförmigen Überwurfmutter 3 und einem Spannfutter 9, welches im Inneren zwischen dem Basisteil 2 und der Überwurfmutter 3 angeordnet ist (vgl. Figur 3). Die Klemmvorrichtung 1 weist eine zentrale Öffnung 7 zur Durchführung eines Kabels (nicht näher dargestellt) auf. Das Basisteil 2 weist hier ein Gewinde 4 auf, mittels dem die Klemmvorrichtung z.B. an einem Schaltschrank (nicht dargestellt) befestigt werden kann. Andere Verbindungsmittel sind möglich. Die Überwurfmutter 3 wird in der gezeigten Ausführungsform mit dem Basisteil 2 durch Verschrauben wirkverbunden.

Wie in **Figur 3** gut zu erkennen ist, ist das Spannfutter 9 zwischen dem Basisteil 2 um der Überwurfmutter 3 angeordnet. Die Überwurfmutter 3 weist eine Aufnahmeöffnung 17 für das Spannfutter 9 auf. Mit dem Basisteil 2 wirkt das Spannfutter 9 über eine konusförmig ausgebildete, aussen liegende Wirkfläche 10 zusammen, die durch einen Aussenbereich der fingerartig von einem Basisring 18 vorstehenden Spannbacken 12, 14 gebildet wird. Am Basisteil 2 ist dafür eine ebenfalls konusförmig ausgebildete, nach innen gerichtete Gegenfläche 11 vorgesehen. Zwischen der Basis 2 und der Überwurfmutter 3 ist eine zweite Dichtung 8 angeordnet.

Wie in den **Figuren 3** und **4** zu erkennen ist, ist zwischen der ersten Überwurfmutter 3 und einer zweiten Überwurfmutter 5 eine hülsenförmige Dichtung 6 aus einem gummiartigen Material angeordnet. Durch Verschrauben der zweiten Überwurfmutter 5 mit der ersten Überwurfmutter 3 wird die Dichtung 6 axial zusammengepresst und verringert dadurch ihren inneren Querschnitt bis sie ein durchgeführtes Kabel dichtend umschliesst.

**Figur 5** zeigt ein Spannfutter 9 in undeformiertem Zustand von der Seite, **Figur 6** das selbe Spannfutter 9 in einer Vorderansicht (X-Richtung), **Figur 7** in einer perspektivischen Ansicht von schräg oben und **Figur 8** zeigt eine Schnittdarstellung entlang der Schnittlinie A-A gemäss Figur 6. Das Spannfutter 9 weist erste und zweite Spannbacken 12, 14 auf, die benachbart zueinander angeordnet und durch Schlitze 16 voneinander getrennt sind. Die Spannbacken 12, 14 stehen fingerartig von einem Basisring 18 ab. Die Spannbacken 12, 14 sind in radialer Richtung biegeelastisch ausgebildet, respektive angeordnet. Die Spannbacken 12, 14 weisen in einem Längsschnitt (X-Z-Ebene, vgl. Figur 8) gesehen ein dünnes Unterteil (Stamm) 19 und ein verdicktes Oberteil (Kopf) 20 auf, das auf seiner Aussenseite die (im undeformierten Zustand) durch die einzelnen Segmente gebildete konische Wirkfläche 10 trägt. Wie aus **Figur 8** hervorgeht, weist der Stamm 19 der Spannbacken 12, 14 eine Länge L und eine Dicke D auf, die so gewählt ist, dass die Spannbacken 12, 14 während dem Verschrauben in radialer Richtung nach innen deformiert werden können (vgl. **Figuren 9** und **10**). Über die Länge L und die Dicke D, sowie die Breite B (nur an einem Segment 14 beispielhaft gezeigt, vgl. **Figur 6**) kann die Biegeelastizität nach Bedarf eingestellt werden. Alternativ oder in Ergänzung ist der Basisring 18 elastisch ausgestaltet, so dass er zumindest einen Teil der radialen Biegung aufnimmt. Insbesondere bei erfindungsgemäßen Ausführungsformen aus Metall ist ein biegeweicher Basisring 18 bzw. eine biegeweiche Basis von Vorteil, da die in Umfangsrichtung gekrümmten Segmente 12, 14 eine hohe radiale Biegesteifigkeit aufweisen können.

**Figur 6** zeigt das Spannfutters 9 in einer Draufsicht (x-Achse). entlang der x-Achse mit mehreren ersten Spannbacken 12 und mehreren zweiten Spannbacken 14, welche umlaufend abwechslungsweise als Segmente des hülsenförmigen Spannfutters 9 ausgestaltet sind. Die einzelnen Segmente weisen einen keilförmigen Querschnitt auf und sind durch Schlitze 16 voneinander getrennt. Die Seitenflächen 13, 15 der Schlitze 16 wirken beim Verspannen als Wirk- und Gegenflächen zusammen. Die ersten Spannbacken 12 weisen einen sich nach innen, zum Zentrum hin verjüngenden, trapezähnlichen Querschnitt auf, wobei die Seitenflächen 13, 15 die Schenkel des Trapezes definieren. Im Unterschied dazu verbreitert sich der ebenfalls trapezähnliche Querschnitt der zweiten Spannbacken 14 zum Zentrum hin. Die einzelnen Schlitze 16 liegen sekantenartig zum Basisring 18. Die einzelnen Schlitze 16 sind in der gezeigten Ausführungsform parallel zur x-Achse angeordnet. Eine nicht-achsparallele Anordnung wäre im Prinzip möglich, bewirkt jedoch, dass die Biegesteifigkeit über die Länge variiert.

Das Ausführungsbeispiel zeigt ein Spanfutter 9 mit jeweils fünf ersten und fünf zweiten Spannbacken 12, 14, welche auf einem Kreis alternierend nebeneinander angeordnet sind. Grundsätzlich kann das Spannfutter 9 jeweils eine beliebige gerade oder ungerade Anzahl erster und zweiter Spannbacken 12, 14 aufweisen, jedoch mindestens je zwei. Die zehn Schlitze 16 liegen paarweise auf einer Sekante s (vgl. **Figur 6**) und/oder sind spiegelsymmetrisch angeordnet. Bei Drehteilen können die Schlitze 16 so in einem Bearbeitungsschritt gefertigt werden.

Die radiale Verschiebung der zweiten Spannbacken 14 bzw. der radiale Hub wird durch verschiedene Faktoren bestimmt, wie der Anzahl der Segmente 12, 14 der Anordnung und Breite der Schlitze 16, der Ausgestaltung der Wirkfläche 10 und dem Querschnitt der Spannbacken 12, 14, d.h. der Form von Basisring 18, Stamm 19 und Kopf 20. Um den notwendigen radialen Hub erzeugen zu können müssen die Wirk- und die Gegenfläche 10, 11 entsprechend länger ausgestaltet sein. Die symmetrische Ausgestaltung und Anordnung der Spannbacken 12, 14 gewährleistet, dass diese gleichmässig radial nach innen verschoben werden. Asymmetrische Ausgestaltungen sind im Prinzip möglich. Ein Nachteil kann darin gesehen werden, dass die dabei auftretenden Kräfte nicht ausgeglichen sind und unter Umständen keine gleichmässige Klemmung resultiert.

Die **Figuren 9** und **10** zeigen vereinfacht dargestellt ein Spannfutter 9 in einem deformierten bzw. verspannten Zustand, so wie es während dem Verspannen von Überwurfmutter 3 und Basisteil 2 (vgl. Figur 4) typischer Weise verformt wird. Die ersten Spannbacken 12 wirken - wie in **Figur 10** durch einen erster Pfeil F1 schematisch dargestellt - über die Wirkflächen 10 mit einer entsprechenden Gegenfläche 11 an einem der umgebenden Teile 2, 3 zusammen und werden dadurch radial nach innen gedrückt. Dadurch wird über die seitlichen Wirkflächen 13, 15 des ersten Spannfutters 12 eine Kraft F2 auf die zweiten Spannbacken 14 ausgeübt, die eine entsprechende Gegenkraft F3 bewirken. Infolge dessen werden die zweiten Spannbacken 14 mit einem Übersetzungsverhältnis, das durch die Anordnung der Schlitze 16 und die sich daraus ergebenden Winkel und Winkelverhältnisse gegenüber der radialen Richtung bestimmt ist, verstärkt radial nach innen gedrückt (schematisch durch Pfeil F4 angedeutet), so dass ein durch die zentrale Öffnung 7 der Klemmvorrichtung 1 durchgeführtes Kabel (nicht dargestellt) infolge der lokalen Querschnittsverkleinerung aussen geklemmt wird. Die gezeigte Ausführungsform mit fünf ersten und fünf zweiten Spannbacken 12, 14 weist verschiedene Vorteile auf. Einerseits können je zwei Schlitze 16 auf einer Linie zueinander fluchtend angeordnet werden, was sich positiv auf den Produktionsprozess auswirkt, da weniger Einschnitte erforderlich sind. Ein weiterer Vorteil ist, dass die durch die Schlitze 16 gebildeten seitlichen Wirkflächen 13, 15 ein effizientes Übersetzungsverhältnis bilden, so dass die zweiten Spannbacken gegenüber den ersten beim Wirkverbinden - wie in den **Figur 9** und **10** schematisch dargestellt - verstärkt nach innen gepresst werden. Ein weiterer Vorteil besteht darin, dass infolge der gewählten Anzahl und Anordnung der Spannbacken 12, 14 sich die zweiten Spannbacken 14 erst bei sehr starker radialer Deformation (vgl. **Figur 10**) gegenseitig in die Quere kommen. Dadurch wird es möglich mit einem einzigen Spannfutter Kabel mit stark unterschiedlichen Querschnitten zu klemmen.

Das erfindungsgemässe Spannfutter 9 kann, wie gezeigt, als separates Teil ausgestaltet sein oder aber in das Basisteil 3 oder die Überwurfmutter 3 integriert sein.

### Liste der Bezugszeichen

- 1: Klemmvorrichtung
- 2: Basis
- 3: erste Überwurfmutter
- 4: Gewinde
- 5: zweite Überwurfmutter
- 6: erste Dichtung
- 7: Öffnung (zentrale Öffnung)
- 8: zweite Dichtung
- 9: Spannfutter
- 10: Wirkfläche
- 11: Gegenfläche
- 12: erste Spannbacke(n)
- 13: erste seitliche Wirkfläche(n)
- 14: zweite Spannbacke(n)
- 15: zweite seitliche Wirkfläche(n)
- 16: Schlitz(e)
- 17: Aufnahmeöffnung
- 18: Basisring
- 19: Stamm (Unterteil)
- 20: Kopf (Oberteil)

## Patentansprüche

1. Klemmvorrichtung (1) zum Klemmen eines Kabels mit
einem Basisteil (2),
einer Überwurfmutter (3), welche mit dem Basisteil (2) wirkverbindbar ist, und
einem Spannfutter (9) das zwischen dem Basisteil (2) und der Überwurfmutter (3) angeordnet ist und mit diesen über eine Wirkfläche (10) zusammenwirkt, derart, dass beim Wirkverbinden der Überwurfmutter (3) mit dem Basisteil (2) erste Spannbacken (12) des Spannfutters (9) radial nach innen gedrückt werden und zweite Spannbacken (14) des Spannfutters (9), die mit den ersten Spannbacken (12) über seitliche Wirkflächen (13, 15) zusammenwirken, in Folge dessen durch die ersten Spannbacken (12) stärker radial nach innen gedrückt werden als die ersten Spannbacken (12), so dass ein durchgeführtes Kabel aussen geklemmt wird,
**dadurch gekennzeichnet, dass** das Spannfulter (9)
der Klemmvorrichtung (1) aus Metall gefertigt ist und die Spannbacken (12, 14) an ihrer Basis durch einen biegeweichen Basisring (18) miteinander verbunden sind.

2. Klemmvorrichtung (1) gemäss Patentanspruch 1, **dadurch gekennzeichnet, dass** das Spannfutter (9) hülsenförmig ausgestaltet ist und die ersten und die zweiten Spannbacken (12, 14) abwechslungsweise zu einander segmentartig auf einem Kreis durch die Wirkfläche (13, 15) bildenden Schlitze (16) getrennt angeordnet sind, wobei die Schlitze sekantenartig zum Kreis liegen.

3. Klemmvorrichtung (1) gemäss einem der vorangehenden Patentansprüche, **dadurch gekennzeichnet, dass** die Spannbacken (12, 14) in radialer Richtung biegeelastisch ausgestaltet sind.

4. Klemmvorrichtung (1) gemäss einem der vorangehenden Patentansprüche, **dadurch gekennzeichnet, dass** die Schlitze (16) parallel zur Achse (x) des Spannfutters (9) angeordnet sind.

5. Klemmvorrichtung (1) gemäss einem der vorangehenden Patentansprüche, **dadurch gekennzeichnet, dass** die Spannbacken (12, 14) in Längsrichtung einen pilzförmigen Querschnitt mit einem schlanken Stamm und einem zum freien Ende hin verdickten Oberteil aufweisen.

6. Klemmvorrichtung (1) gemäss einem der vorangehenden Patentansprüche, **dadurch gekennzeichnet, dass** das Spannfutter (9) fünf erste (12) und zwischen diesen alternierend fünf zweite, jeweils symmetrische Spannbacken (14) aufweist.

7. Klemmvorrichtung (1) gemäss einem der vorangehenden Patentansprüche, **dadurch gekennzeichnet, dass** Schlitze (16) von zwei nicht benachbarten Spannbacken (12, 14) als Sekanten, in der selben Ebene liegend zueinander angeordnet sind.

8. Klemmvorrichtung (1) gemäss Patent Anspruch 6 und 7, **dadurch gekennzeichnet, dass** die zehn Schlitze (16) jeweils paarweise auf einer Sekante (s) liegen.

9. Klemmvorrichtung (1) gemäss einem der vorangehenden Patentansprüche, **dadurch gekennzeichnet, dass** das Spannfutter (9) aus vernickeltem Messing besteht.

10. Klemmvorrichtung (1) gemäss einem der vorangehenden Patentansprüche, **dadurch gekennzeichnet, dass** die seitlichen Wirkflächen (13, 15) mit einem die Gleitfähigkeit erhöhenden Gleitmittel beschichtet ist.

## Claims

1. Clamping device (1) for clamping a cable, having
a base part (2),
a union nut (3) which is operatively connectable to the base part (2), and
a chuck (9) which is arranged between the base part (2) and the union nut (3) and interacts therewith via an active surface (10),
such that when the union nut (3) is operatively connected to the base part (2) first chuck jaws (12) of the chuck (9) are pushed radially inwards and second chuck jaws (14) of the chuck (9), which interact with the first chuck jaws (12) via lateral active surfaces (13, 15), are consequently pushed radially inwards by the first chuck jaws (12) more strongly than the first chuck jaws (12) so that a cable that has been passed through is clamped externally,
**characterized in that**
the chuck (9) of the clamping device (1) is produced from metal and the chuck jaws (12, 14) are connected together at their base by a resiliently flexible base ring (18).

2. Clamping device (1) according to Claim 1, **characterized in that** the chuck (9) is configured in the form of a sleeve and the first and the second chuck jaws (12, 14) are arranged in alternation with one another in a segment-like manner on a circle and are separated by slits (16) that form the active surface (13, 15), wherein the slits lie in the manner of a secant with respect to the circle.

3. Clamping device (1) according to either of the preceding claims, **characterized in that** the chuck jaws (12, 14) are configured to be resiliently flexible in the radial direction.

4. Clamping device (1) according to one of the preceding claims, **characterized in that** the slits (1 6) are arranged parallel to the axis (x) of the chuck (9).

5. Clamping device (1) according to one of the preceding claims, **characterized in that** the chuck jaws (12, 14) have in the longitudinal direction a mushroom-like cross section having a narrow stem and a thickened top part towards the free end.

6. Clamping device (1) according to one of the preceding claims, **characterized in that** the chuck (9) has five first chuck jaws (12) and, in alternation between the latter, five second, in each case symmetrical chuck jaws (14).

7. Clamping device (1) according to one of the preceding claims, **characterized in that** slits (1 6) of two non-adjacent chuck jaws (12, 14) are arranged as secants, lying in the same plane, with respect to one another.

8. Clamping device (1) according to Claims 6 and 7, **characterized in that** ten slits (1 6) lie in each case in pairs on a secant (s).

9. Clamping device (1) according to one of the preceding claims, **characterized in that** the chuck (9) consists of nickel-plated brass.

10. Clamping device (1) according to one of the preceding claims, **characterized in that** the lateral active surfaces (13, 15) are coated with a lubricant that increases the sliding capability.

## Revendications

1. Dispositif de blocage (1) pour bloquer un câble, comprenant une partie de base (2),
un écrou-raccord (3) qui peut être en liaison fonctionnelle avec la partie de base (2) et
un mandrin de serrage (9) qui est disposé entre la partie de base (2) et l'écrou-raccord (3) et coopère avec ceux-ci par le biais d'une surface active (10),
de telle sorte que, lorsque l'écrou-raccord (3) est en liaison fonctionnelle avec la partie de base (2), des premières mâchoires de serrage (12) du mandrin de serrage (9) soient pressées radialement vers l'intérieur et que des deuxièmes mâchoires de serrage (14) du mandrin de serrage (9) qui coopèrent avec les premières mâchoires de serrage (12) par le biais de surfaces actives latérales (13, 15) soient par conséquent pressées plus fortement radialement vers l'intérieur que les premières mâchoires de serrage (12) par les premières mâchoires de serrage (12), de sorte qu'un câble guidé à travers le dispositif de blocage soit bloqué à l'extérieur, **caractérisé en ce que** le mandrin de serrage (9) du dispositif de blocage (1 est fabriqué en métal et les mâchoires de serrage (12, 14) sont reliées les unes aux autres au niveau de leur base par une bague de base souple (18).

2. Dispositif de blocage (1) selon la revendication 1, **caractérisé en ce que** le mandrin de serrage (9) est configuré en forme de douille et les premières et deuxièmes mâchoires de serrage (12, 14) sont disposées en alternance les unes par rapport aux autres sur un cercle à la manière de segments, de manière séparée par des fentes (16) formant la surface active (13, 15), les fentes étant situées de manière sécante au cercle.

3. Dispositif de blocage (1) selon l'une quelconque des revendications précédentes, **caractérisé en ce que** les mâchoires de serrage (12, 14) sont configurées de manière flexible dans la direction radiale.

4. Dispositif de blocage (1) selon l'une quelconque des revendications précédentes, **caractérisé en ce que** les fentes (16) sont disposées parallèlement à l'axe (x) du mandrin de serrage (9).

5. Dispositif de blocage (1) selon l'une quelconque des revendications précédentes, **caractérisé en ce que** les mâchoires de serrage (12, 14) présentent dans la direction longitudinale une section transversale en forme de champignon comprenant un pied mince et une partie supérieure épaissie en direction de l'extrémité libre.

6. Dispositif de blocage (1) selon l'une quelconque des revendications précédentes, **caractérisé en ce que** le mandrin de serrage (9) comprend cinq premières mâchoires de serrage (12) et cinq deuxièmes mâchoires de serrage (14) respectivement symétriques disposées en alternance entre celles-ci.

7. Dispositif de blocage (1) selon l'une quelconque des revendications précédentes, **caractérisé en ce que** les fentes (16) de deux mâchoires de serrage (12, 14) non adjacentes sont disposées de manière à être situées dans le même plan, en tant que sécantes l'une à l'autre.

8. Dispositif de blocage (1) selon les revendications 6 et 7, **caractérisé en ce que** les dix fentes (16) sont situées par paires sur une sécante respective (s).

9. Dispositif de blocage (1) selon l'une quelconque des revendications précédentes, **caractérisé en ce que** le mandrin de serrage (9) est constitué de laiton nickelé.

10. Dispositif de blocage (1) selon l'une quelconque des revendications précédentes, **caractérisé en ce que** les surfaces actives latérales (13, 15) sont recouvertes d'un lubrifiant augmentant l'aptitude au glissement.
